(19) Europäisches Patentamt
European Patent Office
Office européen des brevets

(11) **EP 4 481 646 A1**

(12) **EUROPEAN PATENT APPLICATION**

(43) Date of publication:
**25.12.2024 Bulletin 2024/52**

(21) Application number: **23180020.2**

(22) Date of filing: **19.06.2023**

(51) International Patent Classification (IPC):
*G06Q 10/063* (2023.01)

(52) Cooperative Patent Classification (CPC):
**G06Q 10/063**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Celonis SE
80333 München (DE)**

(72) Inventors:
• **van Detten, Jan Niklas
  80333 München (DE)**
• **Leemans, Sander J. J.
  80333 München (DE)**
• **Schumacher, Pol
  80333 München (DE)**

(74) Representative: **2s-ip Schramm Schneider
Bertagnoll
Patent- und Rechtsanwälte Part mbB
Denninger Straße 169
81925 München (DE)**

(54) **PROCESS TREE DISCOVERY USING AN APPROXIMATE INDUCTIVE MINER**

(57) The present invention relates to an automated discovery of sound process models from process activities of traces of an event log. Provided is a computer-implemented method, the Approximate Inductive Miner (AIM), which exploits clustering techniques to investigate an exponentially growing state space in polynomial runtime. According to an aspect of the invention, the method comprises an integrated parameter suggestion, based on novel cut quality estimates, under consideration of the information loss induced by filtering the event log.

Fig. 1

**Description**

Field of the invention

The present invention relates to an automated discovery of sound process models from process activities, and more particularly to a computer-implemented method for constructing a process tree based on clustering activities in the event log to be applied within the Inductive Miner framework.

Background of the invention

Processes are executed everywhere and any time. A process comprises a number of process activities and executing these process activities generates a process instance, also called case. As of today, many processes are monitored, wherein process steps are usually recorded with a number of properties.

Modern business environments produce track records of process activities in event logs, which enable the empirical analysis of the underlying business process. An event log comprises traces of activities which are assigned to a single case and ordered in sequence of their execution.

An important step in the process analysis is the discovery of a process model from one or more event logs. Many algorithms exist for this purpose, each producing models with different properties on relevant quality dimensions. Yet, discovering a process model from an event log is one of the most challenging process mining tasks.

By definition, the process discovery algorithm is a function that maps an event log onto a process model such that the process model is "representative" for the behavior seen in the event log.

The consensus on process model quality criteria focuses on fitness, precision, simplicity, soundness and rediscoverability. Fitness describes a model's ability to represent the behavior contained in the event log. Precision measures how well a model excludes behavior dissimilar to the event log. Simplicity values a minimal control flow complexity and model size. The soundness property guarantees a model to be deadlock free and to not include any unreachable parts. Rediscoverability is the ability to discover a process model from an event log that is equivalent to the original one.

Some of the previous process discovery algorithms adhere to the Inductive Miner (IM) framework introduced in [1]. The IM framework recursively splits an event log based on an activity partition and an operator which describes the control flow relation between the resulting partition parts. The combination of such an activity partition and operator is called a cut. The goal of the IM framework is to split the event log into predefined base cases. The IM framework relies on a set of fall-through methods to handle events that neither fit any of the available operators nor are a base case. The fall-through methods, however, increasingly scarify precision to represent the event log with the available operators, resulting in process models which may accept more behavior than it should.

Some of the state-of-the-art algorithms for process discovery may handle noise, however, only by way of filtering methods based on parameters, which opens a large range of input values to select from. In principle, sufficiently good filter parameters may be determined using a hyper-parameter optimization at design time for a given event log. The resulting default parameters, however, may be suboptimal if an event log differs substantially from the event log used for hyper-parameter optimization. Hence, using any existing process discovery methods generally requires producing several process models of which each needs to be evaluated. As a result, applying state-of-the-art process discovery algorithms to a wide range of noise levels as present in real-life event logs can be very time intensive, in particular if the event logs comprise dissimilar behavior.

Object of the invention

It is therefore an object of the present invention to provide a computer-implemented method that enables an efficient and automated discovery of sound process models from an event log.

Solution according to the invention

This object is solved by the computer-implemented method according to the independent claim. Further aspects of the invention and advantageous embodiments are specified in the dependent claims.

Accordingly, provided is a computer-implemented method of constructing a process tree out of an event log, the process tree representing a process model which describes an allowed behavior of a process, wherein the process is executed by executing a plurality of activities.

The method comprises the following steps:

a) receiving the event log comprising a plurality of traces of the activities ordered by execution time,

b) determining whether the event log is a predetermined base case, and if so, adding at least one node representing the base case to the process tree, otherwise

c) determining, whether an operator exists for splitting the event log based on a directly follows footprint generated for each operator, and if so, splitting the event log into two sub-event logs for the operator and adding an inner node representing the operator to the process tree and continuing with step e), otherwise

d) determining the operator based on clustering the activities in the event log, splitting the event log into two sub-event logs for the operator and adding an inner node representing the operator to the process tree and continuing with step e),

e) repeating the steps b) to d) for each respective sub-event log as event log until step b) applies to each sub-event log, and

f) providing the process tree, wherein the process tree comprises a number of leaf nodes and a number of inner nodes, wherein each leaf node either represents an execution of an activity or an execution of no activity, and wherein each inner node has at least two children and represents by which operator its children are related.

An activity is a digital representation of a real-world occurrence that happened. The combination of an activity with its time stamp and a case to which it is related is termed an event. Exemplary activities are paying an invoice, creating a purchase order for a vendor's product, placing an order, shipping an order, cutting the vegetables in a cooking process, teaching a class of students, or drilling a hole in a manufacturing process. The application of the method according to the invention may be applied to any process as long as it may be captured by event data.

The activities in the traces of the event log may be further sorted by a sorting attribute in case of identical execution time.

In a nutshell, the method according to the invention, also called Approximate Inductive Miner (AIM), replaces the fall-through method of the IM framework by a sophisticated function which enables to find a sufficiently good cut in a fully automated way, i.e., without requiring a selection of appropriate input values for filter parameters. The inventors found that the AIM produces process trees from which sound process models may be generated with low control flow complexity and high precision, even on complex event logs. Additionally, AIM may handle a vast range of corrupting event log properties, such as infrequent or incomplete behavior, without requiring any human parameter input or upfront filtering.

Step d) of the AIM uses clustering to prune the exponentially growing state space for potential cuts in the event log such that a sufficiently good cut may be investigated and found in polynomial time complexity. In other words, the clustering provides a tremendous speedup in comparison to an exponential search of the state space that would be required using brute force. In contrast to the previously known process discovery techniques, AIM is the only method that successfully discovers useful process models for event logs with a high number of unique activities in a reasonable time. One of the requirements for a useful process model is that it can be evaluated efficiently. Moreover, AIM is the only process discovery method without the need of a parameter choice.

Further, incorporating the AIM fall-through into the IM framework preserves all rediscoverability guarantees from the Inductive Miner binary (IMb), since these guarantees hold irrespective of the utilized fall-through methods. In other words, all models produced by AIM are guaranteed to be sound due to the use of process trees. A process model is sound, if every activity participates in a process instance and each process instance terminates properly, i.e., without behavioral anomalies such as deadlocks or livelocks.

Preferably, the splitting of the event log is determined based on partitioning a set of unique activities in the event log, the alphabet, into two alphabet partition parts, wherein the operator represents a relationship between the two alphabet partition parts, and wherein assigning each of the activities in a respective part of the alphabet partition to the corresponding sub-event log.

The alphabet is a unique set of activities in the event log. Hence, the alphabet usually has a smaller size than the event log. Partitioning the alphabet into two partition parts, also called alphabet partitions, is more efficient than splitting the event log directly. Once the alphabet partitions are determined, the event log may be split by separating the activities of the event log into sub-event logs according to which alphabet partition the respective activity is assigned.

Preferably, step d) further comprises filtering the event log based on the distribution of each activity across the traces of the event log.

Further preferably, the filtering comprises determining, for each activity, a count of traces comprising the respective activity, determining a filter threshold by multiplying the maximum count of traces with a predefined filter parameter value, and removing every activity from the event log for which the count of traces is smaller than the filter threshold.

The filtering according to an aspect of the invention removes activities that appear in relatively few traces compared to the activity contained in the maximum number of traces. The filtering is based on counting in how many traces a specific activity appears. With respect to counting how often a specific activity appears in the event log, the counting according to this aspect of the invention has the advantage of eliminating a self-loop bias for filtering.

In some embodiments, the predefined filter parameter value ranges from 0 to 1, preferably using steps of 0.1, i.e.,

[0, 0.1, 0.2, 0.3, 0.4, 0.5, 0.6, 0.7, 0.8, 0.9, 1].

In one embodiment, the clustering of step d) further comprises: determining relation estimates for each pair of activities in the alphabet, wherein each relation estimate represents a distance between the respective activities, clustering the activities based on the relation estimates, wherein each cluster corresponds to one of the alphabet partitions for the operator, wherein the operator is predetermined out of a group of operators, the group consisting of a sequence operator, an exclusive choice operator and a parallel operator.

Preferably, a combination of the determined alphabet partitions and the respective operator by which the alphabet partitions are related is a cut through the event log, wherein the method further comprises evaluating a cut quality estimate for at least one cut for each operator of the group of operators.

The relation estimates for each pair of activities in the alphabet describe the likelihood of two activities to be separated by an operator of the available operators, i.e., any of the exclusive choice operator, the parallel operator, the sequence operator or the loop operator. However, clustering the relation estimates is not directly applicable to the loop operator due to its specific structure having a body part and a redo part, which naturally qualify as activity partitions.

Applying the clustering techniques to the relation estimates enables pruning of the cut state space. The cut state space is the set of all potential cuts for a given event log and a cut quality estimate function. In some embodiments, the cut state space further depends on the filter parameter space. There are two overall types of cuts: a first type of binary operator cuts generating non-empty partition parts, and a second type of silent structure cuts resulting in each one empty partition part. The cut state space grows exponentially with the size of the alphabet.

According to an aspect of the invention, the pairwise activity relation estimates are arranged into a quadratic distance matrix, in some embodiments for each filter parameter value. As clustering technique, any clustering method that allows a fixed cluster count, such as k-means, may be used. Preferably, the fixed cluster count is two.

The detected clusters correspond to the alphabet partition for the respective operator, and if applicable, for a specific filter parameter value. The search space is subsequently reduced by excluding all cuts with a symmetric operator, i.e., parallel operator and exclusive choice operator, and non-empty partition parts, except for the ones of the detected clusters, resulting in only two cuts per filter parameter. For the non-symmetric sequence operator, the ordering of the partition needs to be considered such that all cuts except for the permutation of the detected clusters are excluded, resulting in only two cuts per filter parameter. As a result, the search space, originally the cut state space, is strongly reduced.

Preferably, the method further comprises determining alphabet partitions for a loop operator by assigning activities based on their pairwise activity relation to a body part or a redo part, resulting in two alphabet partitions, and evaluating the cut quality estimate for the cut comprising the loop operator and the two alphabet partitions.

For loop cuts, the search space may be pruned to a single cut.

Preferably, the method further comprises evaluating the cut quality estimate for a silent skip cut and a silent loop cut.

Overall, including the silent skip cut and the silent loop cut, only 7 cuts need to be evaluated per filter parameter value, such that the pruned state space only grows linear in the size of the selected parameter space and not exponential in the size of the alphabet.

In one embodiment, the method further comprises evaluating each cut quality estimate for a set of predefined filter parameters for filtering the event log, wherein correcting each cut quality estimate by a filter penalty term.

Preferably, the filter penalty term is a ratio of the number of activities in the filtered event log and the number of activities in the original event log.

Picking a cut with the highest quality estimate in the pruned state space with applied filtering can lead to an excessive filtering as removing activities from the alphabet often increases the chance to find a near perfect cut, while inducing information loss in return. The filter penalty term therefore adjusts the quality estimate for each cut to the utilized parameter value to prohibit excessive filtering. The filter penalty term may be a factor that is applied to each cut quality estimate.

In one embodiment, the cut quality estimate is generated by accumulating a relation estimate multi-set comprising all relevant relation estimates based on the operator, wherein computing the relevant relation estimates based on a frequency of directly follows relations, a frequency of strictly indirectly follows relations and a frequency of eventually follows relations for pairs of activities.

In one embodiment, the cut comprising the sequence operator is a sequence cut generating the two distinct alphabet partitions, wherein one alphabet partition comprises the activities of the alphabet which are executed per trace of the event log exclusively before the activities of the other alphabet partition.

In one embodiment, the cut comprising the exclusive choice operator is an exclusive choice cut generating the two distinct alphabet partitions, wherein the activities are executed per trace of the event log exclusively from one alphabet partition.

In one embodiment, the cut comprising the parallel operator is a concurrent cut generating the two distinct alphabet partitions, wherein the activities are executed per trace of the event log interleaved in parallel in different parts of one alphabet partition.

In one embodiment, the cut comprising the loop operator is a loop cut, generating two distinct alphabet partitions, wherein the activities of the one alphabet partition are executed per trace of the event log and optionally repeated after the activities of the other alphabet partition being executed in the event log.

Short description of the figures

Some embodiments of the invention are described in further detail in combination with the figures, which show:

**Fig. 1** a flow chart representing an embodiment of the Approximate Inductive Miner according to an embodiment of the invention;

**Fig. 2** an example of a process tree constructed according to an embodiment of the invention;

**Fig. 3** a box plot summarizing the accuracy distributions for various cut quality estimates when applying the method according to an aspect of the invention to event logs of the Process Discovery Contest 2022;

**Fig. 4** a hyper-parameter optimization according to an aspect of the invention; and

**Fig. 5** a grouped bar chart comparing evaluation results of the method according to an aspect of the invention to methods of prior art.

Detailed description of the invention

Process discovery is one of the core areas of process mining and still a very active area of research. The discipline of process discovery provides algorithms which aim at discovering the "best" process model, i.e., a process model with optimized quality criteria such as fitness, precision, etc., given an event log. An event log traditionally comprises a sequence of process steps which are assigned to a single process instance, also called case. Discovering optimized process models from event logs plays a crucial role in process mining applications as it enables to uncover the core of a process.

An event log L is a multi-set of traces $\sigma$ with a certain multiplicity. A trace $\sigma$ consists of ordered activities a, b or may be empty. The set of unique activities in the event log L is called the alphabet $\Sigma$. The start activities and end activities are sets of unique activities that appear in the first and last position of a trace $\sigma$ in the event log L, respectively. Metrics of the event log L include the frequency of traces, the total occurrence count of an activity a across all traces $\sigma$ of the event log L and the sum of all activity occurrence counts.

Different follows-graphs may be generated from an event log L. Each follows-graph contains a node A for each activity in the alphabet $\Sigma$. The directly follows-graph (DFG) of an event log L has an edge $a \twoheadrightarrow b$ between two activities a and b if there is a trace in which activity b follows directly the activity a. The strictly indirectly follows-graph (IFG) has an edge $a \twoheadrightarrow^* b$ between two activities a and b if there is a trace having both activities a, b, wherein the first activity b does not directly follow the second activity a. The eventually follows-graph (EFG) has an edge $a \twoheadrightarrow^+ b$ between the two activities a and b if there is a trace in which the first activity b follows either directly or indirectly the second activity a. The edge frequencies $|a \twoheadrightarrow b|$, $|a \twoheadrightarrow^+ b|$ and $|a \twoheadrightarrow^* b|$ indicate how often the activity b directly, eventually or indirectly follows activity a.

Process models may be represented by process trees T for an alphabet $\Sigma$ without empty or silent activities $\tau$. A process tree T comprises multiple leaf nodes A with labels of the alphabet $\Sigma$ or a silent activity $\tau$ and several inner nodes O with labels in the set of available operators $\{\rightarrow, \times, \|, \circlearrowleft\}$. Each inner node has a number of child nodes O, A in the tree structure T. Without loss of generality only binary trees, i.e., each inner node O has exactly two children O, A, are considered in the following. Note that for each non-binary process tree a language equivalent binary process tree T may be determined. Each process tree T may be translated into the language of traces it allows.

A leaf node A with an activity label represents the execution of the respective activity, while a leaf node A with a label of a silent activity $\tau$ represents the execution of no activity. The label of an inner node O in the process tree T describes by which operator $\oplus$ its children O, A are related.

The available operators $\oplus$ are the exclusive choice operator $\times$, the sequence operator $\rightarrow$, the parallel operator $\|$ and the loop operator $\circlearrowleft$. The exclusive choice operator $\times$ allows a trace $\sigma$ of only one of its children O, A to be used with. The sequence operator $\|$ allows a trace $\sigma$ of from its first child and second child in this order. The parallel operator $\|$ allows any pair of traces $\sigma1$, $\sigma2$ from its children to be interleaved, as long as their partial order is kept. The loop operator $\circlearrowleft$ allows the repetition of traces $\sigma$ from its first child after using a trace $\sigma$ from the second one. The first child of a loop is called the body part and the second child of a loop is called the redo part.

Exclusive choice and loop nodes having a silent activity $\tau$ as one of their children nodes O, A create special structures. An exclusive choice node with only one silent activity $\tau$ as child is called a silent skip which is used to describe optional behavior. A loop node having a silent activity $\tau$ as redo part and a non-silent activity as body part is called a silent loop, which allows arbitrary repetitions of the body part.

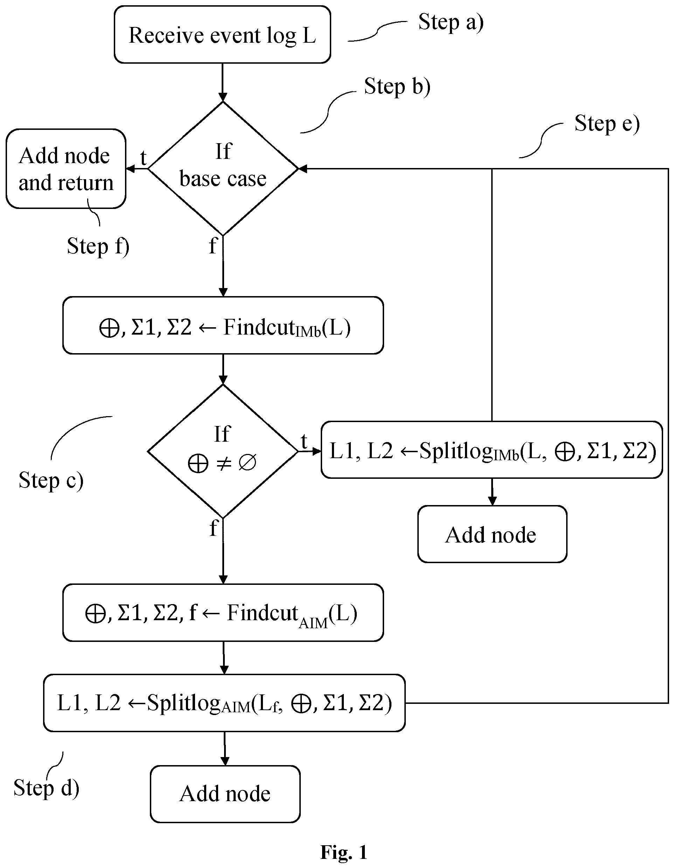

**Fig. 1** shows a flow chart representing an embodiment of the Approximate Inductive Miner according to an embodiment of the invention.

The method according to the invention, Approximate Inductive Miner (AIM), employs two aspects which improve either the quality of the mined process model or reduce the runtime of the computation.

The AIM is based on the IM framework. The general idea of the IM framework is to recursively constructs a process tree T out of an event log L that is provided in step a).

If the event log L is not a recursion base case, which is checked in step b), a cut in the event log L is searched. A cut consists of a partition of the alphabet into two alphabet partitions $\Sigma 1$, $\Sigma 2$ and an operator $\oplus$ of the available operator set $\{\rightarrow, \times, ||, \circlearrowleft \}$.

Step c) of the method according to the invention essentially uses the cut detection of the IM framework. In some embodiments, as follows, the IM implementation produces purely binary process trees, which is called IMb in the following. Each operator $\oplus$ in the function $FINDCUT_{IMb}$ induces a unique set of DFG properties if the event log L adheres to it, which is called the operators footprint. The DFG of the event log is used to check if any alphabet partition $\Sigma 1$, $\Sigma 2$ fits an operator footprint, which is not guaranteed. In other words, the IMb is particularly efficient in finding perfect cuts, however, such a perfect cut may not necessarily exist for a given event log L. In particular, the function $FINDCUT_{IMb}$ is limited to handle a non-empty alphabet partition $\Sigma 1$, $\Sigma 2$ and fails for structures of silent activities $\tau$.

If a cut is found, the event log L is split with the function $SPLITLOG_{IMb}$ into two sub-event logs $L_1$ and $L_2$. For an operator $\oplus \in \{||, \times \rightarrow\}$ each of the activities in the alphabet $\Sigma$ is assigned to sub-event log $L_1$ or $L_2$ if it is in the partition part $\Sigma_1$ or $\Sigma_2$. For the loop operator $\circlearrowleft$ additional trace splitting is necessary. Each trace $\sigma$ in which one activity a directly follows another activity b is split between the activity a and the activity b. Subsequently, the traces $\sigma$ are divided over the two sub-event logs L1, L2, depending on which part of the alphabet partition $\Sigma 1$, $\Sigma 2$ includes each of their activities.

According to an aspect of the invention, all empty traces $\sigma$ are removed from the event log L before applying the function $SPLITLOG_{IMb}$ to avoid an undesirable accumulation of empty traces $\sigma$ across multiple recursion steps based on silent cuts.

The method according to the invention is repeated starting from step b) using each of the sub-event logs L1, L2 as event-log L. The recursion continues on the resulting sub-event logs L1, L2 until a base case is found using the function BASECASE. A base case is reached if the event log L is empty, or when its alphabet $\Sigma$ only contains a single activity. In this case it is not possible to split the event log L, or partition its alphabet $\Sigma$, any further. An empty event log L adds a leaf node A representing a silent activity $\tau$ to the process tree T, while an event log L that only contains the trace $\sigma$ of a single activity adds a leaf node A with the label of the respective activity to the process tree T. If the event log L contains a trace $\sigma$ with at least one repetition of the remaining single activity, a self-loop of the single activity is returned as a base case. In this case, an inner node O representing the loop operator $\circlearrowleft$ with two children as leaf nodes A, one representing the single activity and the other representing a silent activity $\tau$, are added to the process tree T.

Preferably, the BASECASE function returns a silent base case if the event log L is empty. If the event log L contains more than one unique activity, no base case applies. If the event log contains only one unique activity a, the function BASECASE returns either $\times (a, \tau)$, a or $\circlearrowleft (a, \tau)$, depending on the tightest structure that fits the most traces $\sigma$. By definition, $Q_\times(L) = | [\sigma \in L \mid \sigma = \epsilon] |$, $Q_a(L) = | [\sigma \in L \mid \sigma = (a)] |$ and

$$Q_\circlearrowleft(L) = | [\sigma \in L \mid \sigma \neq \langle a \rangle \wedge \sigma \neq \epsilon] |.$$

$\times (a, \tau)$, a and

$$\circlearrowleft (a, \tau)$$

are chosen depending on the maximum value of $Q_\times(L)$,

$$Q_\circlearrowleft(L)$$

and $Q_a(L)$. In case of equality, the default base case order a, $\times (a, \tau)$,

$$\circlearrowleft (a, \tau)$$

$(a, \tau)$ is used.

Accordingly, the BASECASE function according to an aspect of the invention differs from the base case function of the IMb in that the latter always selects base cases based on binary conditions while the former selects base cases based on which base case fits the majority of traces. For instance, if only 1 trace out of 100 traces is a self loop of a single activity and the remaining 99 traces are each the single activity, the IMb produce a self loop as a base case, while the AIM will produce a leaf node for the single activity as the base case.

In case no cut can be found by $FINDCUT_{IMb}$, for an event log L that is not a base case, the core of the invention is employed in step d) to find a sufficiently good cut, which essentially is an approximate cut, in the event log L.

The sufficiently good cut is sought in the state space of cuts $S_L$, or cut state space, which is based on the provided event log L and preferably on the filter parameter space F. For each cut in the cut space state $S_L$ a cut quality estimate function Q depending on the event log L, the specific operator $\oplus$ and the respective alphabet partition parts $\Sigma 1$, $\Sigma 2$ is defined. The sufficiently good cut is the cut of the cut space state $S_L$ with the highest quality estimate Q.

The quality estimate Q for cuts accumulates pairwise relation estimates R for activities. The relation estimate R between two activities describes the likelihood of these two activities to be separated by the respective operator $\oplus$. Note that there are two different relation estimates R used for the loop operator.

$$\circlearrowleft_s$$

describes the likelihood of two activities to be directly related in a loop, while

$$\circlearrowleft_i$$

accounts for indirect loop connections. For a process tree

$$T = \circlearrowleft (\rightarrow (a, b), \rightarrow (c, d)),$$

for example, there is a direct loop relation

$$\circlearrowleft_s$$

for the activity pairs (a, b), (b, c), (c, d), (d, a) and an indirect loop relation

$$\circlearrowleft_i$$

for the activity pairs (a, c), (b, d), (c, a), (d, b).

To determine the cut quality estimate Q, a multi-set M of relevant relation estimates R is defined first. For a cut $(\oplus, \Sigma_1, \Sigma_2)$ with an operator $\oplus \in \{\rightarrow, \times, \|\}$, the relevant relation estimate multi-set M is defined as

$$M (R, L, \oplus, \Sigma_1, \Sigma_2) = [R (L, \oplus, a, b) \mid a \in \Sigma_1 \wedge b \in \Sigma_2]$$

For a loop cut $(\circlearrowleft, \Sigma_1, \Sigma_2)$ with the start and end activities of the body part $S1 = START(L) \cap \Sigma_1$, $E_1 = END(L) \cap \Sigma_1$, the assumed start and end activities of the redo part $S_2$, $E_2$, and the alphabet partition $\Sigma 1$, $\Sigma 2$ without any start and end activities $\Sigma'_1 = \Sigma_1 \setminus (START(L) \cup END(L))$, $\Sigma'_2 = \Sigma_2 \setminus (S_2 \cup E_2)$, the relation estimate multi-set M is defined as

$$M (R, L, \circlearrowleft, \Sigma_1, \Sigma_2) = [R (L, \circlearrowleft_i, a, b) \mid a \in \Sigma'_1 \wedge b \in \Sigma'_2] \cup$$

$$[R (L, \circlearrowleft_s, a, b) \mid (a \in E_2 \wedge b \in S_1) \vee (a \in E_1 \wedge b \in S_2)]$$

The relation estimate multi-sets M are accumulated to obtain a cut quality estimate Q.

In the following, the cuts in the cut state space $S_L$ are defined for each operator $\oplus$ according to an aspect of the invention, along with the corresponding cut quality estimates Q.

A sequence cut $(\rightarrow, \Sigma_1, \Sigma_2)$ denotes, that the activities in the first alphabet partition part are executed exclusively before the activities in the second alphabet partition part $\Sigma2$. Preferably, the alphabet $\Sigma$ is reduced by filtering to a filtered alphabet $\Sigma_f$. In this case, the potential sequence cuts in the cut state space $S_L$ are then

$$\{(\rightarrow, \Sigma_1, \Sigma_f \setminus \Sigma_1) \mid f \in F \wedge \Sigma_1 \subsetneq \Sigma_f \wedge \Sigma_1 \neq \emptyset\}$$

The cut quality estimate $Q_{AIM}(L, \rightarrow, \Sigma_1, \Sigma_2)$ is defined as the mean $\mu$ of the relation estimate multi-set M using $R_{AIM}(L, \rightarrow, a, b)$ with

$$Q_{AIM}(L, \rightarrow, \Sigma_1, \Sigma_2) = \mu(M(R_{AIM}, L, \rightarrow, \Sigma_1, \Sigma_2))$$

$$R_{AIM}(L, \rightarrow, a, b) = \frac{|a \twoheadrightarrow + b|}{|a \twoheadrightarrow + b| + |b \twoheadrightarrow + a| + 1}$$

An exclusive choice cut $(\times, \Sigma_1, \Sigma_2)$ denotes that in each trace $\sigma$ only activities from one partition part $\Sigma1, \Sigma2$ are executed. Let a be an arbitrary activity appearing in the most traces of the event log L with $a = \arg\max_{a \in \Sigma}(|[\sigma \in L \mid \sigma = (..., a,...)]|)$. Then, the potential, non-symmetrical exclusive choice cuts in $S_L$ are

$$\{(\times, \Sigma_1, \Sigma_f \setminus \Sigma_1) \mid f \in F \wedge \Sigma_1 \subset \Sigma_f \wedge a \notin \Sigma_1 \wedge \Sigma \neq \emptyset\}$$

Note that the arbitrary activity a prevents symmetrical cuts. The cut quality estimate $Q_{AIM}(L, \times, \Sigma_1, \Sigma_2)$ is defined based on $R_{AIM}(L, \times, a, b)$ with

$$Q_{AIM}(L, \times, \Sigma_1, \Sigma_2) = \mu(M(R_{AIM}, L, \times, \Sigma_1, \Sigma_2))$$

$$R_{AIM}(L, \times, a, b) = \frac{1}{|a \twoheadrightarrow + b| + |b \twoheadrightarrow + a| + 1}$$

A concurrent cut $(\|, \Sigma_1, \Sigma_2)$ describes the interleaved concurrent execution of the activities in the different parts of the alphabet partition $\Sigma1, \Sigma2$. The potential, non-symmetrical concurrent cuts in $S_L$, analogue to the exclusive choice cuts, are

$$\{(\|, \Sigma_1, \Sigma_f \setminus \Sigma_1) \mid f \in F \wedge \Sigma_1 \subset \Sigma_f \wedge a \notin \Sigma_1 \wedge \Sigma \neq \emptyset\}$$

The cut quality estimates for concurrent cuts $Q_{AIM}(L, \|, \Sigma_1, \Sigma_2)$ apply a bias l to the mean of the relation estimate multi-set, based on the relation estimates $R_{AIM}(L, \|, a, b)$ with

$$Q_{AIM}(L, \|, \Sigma_1, \Sigma_2) = \mu(M(R_{AIM}, L, \|, \Sigma_1, \Sigma_2)) \cdot (1 - l)$$

$$R_{AIM}(L, \|, a, b) = \frac{2 \cdot |a \twoheadrightarrow b| \cdot |b \twoheadrightarrow a|}{|a \twoheadrightarrow b| \cdot |a \twoheadrightarrow b| + |b \twoheadrightarrow a| \cdot |b \twoheadrightarrow a| + 1}$$

$$l = \min\left(\frac{max(\mu([|\sigma| \mid \sigma \in L]) - |\Sigma|, 0)}{|\Sigma|}, 1\right)$$

A loop cut $(\circlearrowleft, \Sigma_1, \Sigma_2)$ denotes the optional repetition of the activities in the first alphabet partition part $\Sigma_1$, if the activities in the second alphabet partition part $\Sigma_2$ are executed before. The set of potential loop cuts in the cut state space $S_L$ is

$$\{(\circlearrowleft, \Sigma_1, \Sigma_f \setminus \Sigma_1) \mid f \in F \wedge \Sigma_1 \subset \Sigma_f \wedge a \notin \Sigma_1 \wedge \Sigma \neq \emptyset\}$$

The quality estimate for loop cuts $Q_{AIM}$ (L, ↻, $\Sigma_1$, $\Sigma_2$) requires the assumed start and end activities of the redo part of the loop. For a given loop cut (↻, $\Sigma_1$, $\Sigma_2$), an activity a $\in \Sigma_2$ is assumed to be part of the start activities $S_2$ if argmax $_{b \in \Sigma f}$ ($R_{AIM}$

$$(L, ↻_s, b, a)) \in END(L) \cap \Sigma_1.$$

Similarly, a is part of the end activities $E_2$ if argmax

$$_{b \in \Sigma f} (R_{AIM} (L, ↻_s, a, b)) \in START(L) \cap \Sigma_1.$$

. The cut quality estimate Q is then

$$Q_{AIM} (L, ↻, \Sigma_1, \Sigma_2) = \mu (M (R_{AIM}, L, ↻, \Sigma_1, \Sigma_2)) \cdot 1$$

$$R_{AIM} (L, ↻_s, a, b) = \frac{2 \cdot |a \twoheadrightarrow b| \cdot |b \twoheadrightarrow + a|}{|a \twoheadrightarrow b| \cdot |a \twoheadrightarrow b| + |b \twoheadrightarrow + a| \cdot |b \twoheadrightarrow + a| + 1}$$

$$R_{AIM} (L, ↻_i, a, b) = \frac{2 \cdot |a \twoheadrightarrow* b| \cdot |b \twoheadrightarrow* a|}{|a \twoheadrightarrow* b| \cdot |a \twoheadrightarrow* b| + |b \twoheadrightarrow* a| \cdot |b \twoheadrightarrow* a| + 1}$$

A silent skip cut ($\times$, $\Sigma$, $\emptyset$) denotes the optional execution of the activities in the alphabet $\Sigma$. The quality estimate Q for the silent skip cuts $\{(\times, \Sigma_f, \emptyset) \mid f \in F\}$ in the cut state space $S_L$ is defined as

$$Q_{AIM} (L, \times, \Sigma, \emptyset) = | \{\sigma \in L \mid \sigma = \epsilon\} | / |L|$$

A silent loop cut (↻, $\Sigma_f$, $\emptyset$) denotes the optional repetition of the activities in the alphabet $\Sigma$. For the silent loop cuts

$$\{(↻, \Sigma_f, \emptyset) \mid f \in F\}$$

in the cut state space $S_L$ we define the quality estimate

$$Q_{AIM} (L, ↻, \Sigma, \emptyset) = \mu (M (R_{AIM}, L, ↻, \Sigma, \Sigma)) \cdot 1$$

However, the cut space state $S_L$ grows exponentially in the size of the alphabet $\Sigma$, such that evaluating all these cuts using brute force becomes infeasible for large alphabet sizes.

The inventors were the first to effectively prune the cut state space $S_L$ by applying clustering techniques to a given relation estimate R, which dramatically reduces the number of cuts to be evaluated.

Any activity relation estimate function R can be used for this propose, if it captures the likelihood of activities to be separable by each operator $\oplus$. Preferably, all of the pairwise activity relation estimates R (Lf, $\oplus$, a, b) for a specific operator $\oplus$ of the reduced set of operators $\{\rightarrow, \|, \times\}$ and filter parameter value f of the filter parameter space F into a quadratic distance matrix each. Subsequently, a clustering technique with a fixed cluster count of two, such as k-means, is applied to each distance matrix. The detected clusters correspond to the first part $\Sigma_{\oplus,f,1}$ and the second part $\Sigma_{\oplus,f,2}$ of the alphabet partition $\Sigma1$, $\Sigma2$. Using R($L_f$, $\oplus$, a, b) as a distance measure between activities for clustering, means that a high relation estimate R between two activities increases the probability of them ending up in different parts of the alphabet partition $\Sigma_{\oplus,f,1}$, $\Sigma_{\oplus,f,2}$. Note that R ($L_f$, $\oplus$, a, b) potentially contains arbitrary many clusters for $\oplus \in \{\times, \|, \rightarrow\}$ and clustering fails if there are actually less than two. This can only happen if all entries in R($L_f$, $\oplus$, a, b) are identical, which means that all activities have the same relation estimate R to each other and an arbitrary alphabet partition $\Sigma1$, $\Sigma2$ can be used for the alphabet partition $\Sigma_{\oplus,f,1}$, $\Sigma_{\oplus,f,2}$. Next, the search space, i.e., the cut state space $S_L$ is reduced by excluding all cuts with the symmetric operators $\oplus \in \{\| \times\}$ and non-empty partition parts, except for the ones in $\{(\oplus, \Sigma_{\oplus,f,1}, \Sigma_{\oplus,f,2}) \mid f \in F \wedge \oplus \in \{\|, \times\}\}$. For the

nonsymmetric sequence operator $\rightarrow$ the ordering of the partition is to be considered such that all sequence cuts except $\{(\rightarrow, \Sigma_{\rightarrow f,1}, \Sigma_{\rightarrow f,2}), (\rightarrow, \Sigma_{\rightarrow,f,2}, \Sigma_{\rightarrow,f,1}) \mid f \in F\}$ are excluded.

For loop cuts an alphabet partition $\Sigma 1, \Sigma 2$ is determined as follows. First, sorting the sets START $(L_f)$ U END $(L_f)$ by the activity occurrence count in descending order with D = SORT$\downarrow$ (START (Lf) U END (Lf)). Second, iterating over a E D and assigning the first activity a to the body part of the loop partition

$$\Sigma_{\circlearrowleft,f,1},$$

, while the second activity

$$b = \operatorname*{argmax}_{b \in \Sigma f} (R (L_f, \circlearrowleft_s, a, b)$$

is assigned to the redo part of the loop partition

$$\Sigma_{\circlearrowleft,f,2}.$$

Third, establishing the transition between the body part of the loop and the redo part of the loop based on these assignments. Eventually, all activities that remain unassigned after this first assignment process are assigned to the same part of the loop, as the activity that they are the most connected with, according to

$$R(\circlearrowleft_s, L_f, a, b).$$

Subsequently, the cut state space $S_L$ is reduced by removing all loop cuts with non-empty partition parts except those in

$$\{(\circlearrowleft, \Sigma_{\circlearrowleft,f,1}, \Sigma_{\circlearrowleft,f,2}) \mid f \in$$

F}.

The pruned cut state space $S_L$ is significantly smaller than the original one as it contains exactly seven cuts for each parameter value $f \in F$. In other words, in the case without filtering, i.e., filter parameter value f = 0.0, there are only 7 cuts to be evaluated in order to find the sufficiently good cut. There is one cut with non-empty partition parts $\Sigma 1, \Sigma 2$ for each of the available operators $\oplus$, with an additional cut for the non-symmetric sequence operator $\rightarrow$. Additionally, the silent skip cut and the silent loop cut remain. This pruned state space only grows linear in the size of the selected parameter space $|F|$ and not exponential in the size of the alphabet $|\Sigma|$. By computing all relevant cuts for each parameter value f, a suitable parameter value f may be suggested dynamically to generate the cut with the highest quality estimate Q.

According to an aspect of the invention, the event log L is filtered, and the cut quality estimates Q are computed using the filtered event log Lf. However, picking the cut with the highest quality estimate Q in the cut state space $S_L$ may lead to excessive filtering. Removing activities from the event log L often increases the chance to find a near perfect cut, but also induces an information loss in return. To prohibit excessive filtering, the quality estimate Q for each cut in the cut state space $S_L$ is therefore adjusted to the utilized filter parameter value f, with the filter penalty term $N_f$. Hence, the best cut in the cut state space $S_L$ may be therefore determined by

$$\arg\max_{(\oplus, \Sigma1, \Sigma2) \in SL} (\max_{f \in F} (Q(\text{FILTER}(L, f), \oplus, \Sigma_1, \Sigma_2) \cdot N_f))$$

The filter penalty term $N_f$ is a factor which is introduced to punish filtering based on the distribution of activities across the traces $\sigma$ of the unfiltered event log L. According to an embodiment of the invention, the filtering method removes activities that appear in relatively few traces $\sigma$, compared to the activity contained in the maximum number of traces $\sigma$. Let COUNT(a) be the number of traces $\sigma$ that contain the activity a with COUNT(a) = | [$\sigma \in L \mid \sigma$ = (..., a, ...)] |. An activity is subsequently removed from the event log L by FILTER$_{AIM}$ (L, f) if COUNT(a) < arg max$_{b \in \Sigma}$ (COUNT(b) $\cdot$ f). To capture the information loss induced by FILTER$_{AIM}$ (L, f), the relation between the average trace length in the event log L before and after filtering is determined. $N_f$ is therefore computed by the ratio between the sum of all activity occurrence counts in the filtered event log $L_f$ and the the sum of all activity occurrence counts in the unfiltered event log L.

The adjusted quality estimate Q (FILTER (L, f), $\oplus, \Sigma_1, \Sigma_2) \cdot N_f$ not only considers how good a cut fits the potentially filtered event log L, but also expresses how much relative information loss was induced by the filtering. The cut with the highest adjusted quality estimate in $S_L$ therefore provides a conceptual trade off. Preferably, this cut is determined based on pruning of the cut state space $S_L$ as discussed above.

Based on the determined sufficiently good cut at least an inner node O representing the operator $\oplus$ of the cut is added to the process tree T. The sub-event logs L1, L2 produced based on the alphabet partition parts $\Sigma1$, $\Sigma2$ of the cut are processed further according to step e) by repeating the method from step b) with each of the sub-event logs L 1, L2 as event log L.

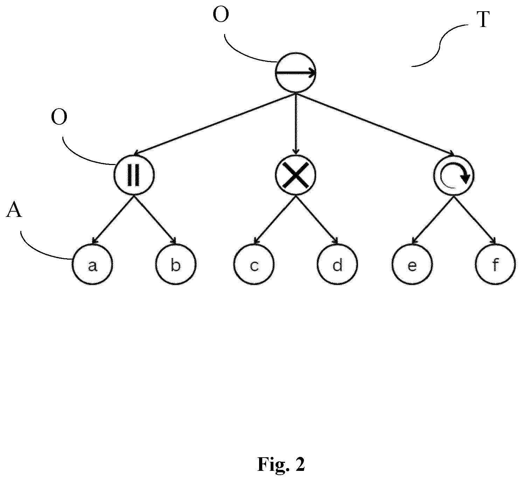

**Fig. 2** shows an example of a process tree constructed according to an embodiment of the invention.

A process tree T is a special representation of a process model, consisting of inner nodes O, leaf nodes A, and edges connecting two nodes O, A. Each inner node O of the process tree T describes the way in which its children nodes are connected, i.e., related in the traces $\sigma$ of the event log L. There are several different operators $\oplus$ available: The sequence operator $\rightarrow$ requires the behavior of all its children nodes to appear in a strict sequential order. The parallel operator $\|$ demands the behavior described by all of its children nodes to appear, and does not restrict potential interleaving concurrency in any way. The exclusive choice operator $\times$ allows only the behavior of exactly one of its children nodes to be executed. The loop operator $\circlearrowleft$ requires the execution of its first children node and allows for an arbitrary number of repetitions afterwards.

The alphabet $\Sigma$ of the event log L having traces $\sigma$ which are allowed by the process tree T of Fig. 2 consists of six activities, {a, b, c, d, e, f}. The root node of the tree T which is an inner node O, represents the sequence operator $\rightarrow$, indicating that in each trace $\sigma$ of the underlying event log L the activities of the first partition part $\Sigma1$, {a, b}, are always followed by the activities of the second partition part $\Sigma2$, {c, d}, which are always followed by the activities of the third partition part $\Sigma3$, {e, f}. Each of the three children of the sequence node is another inner node O representing different operators by which the respective sub-event logs L1, L2 are split further.

The activities a and b of the first alphabet partition part are related by a parallel operator $\|$ as they are represented by leaf nodes A of the inner node O representing the parallel operator $\|$. The activities c and d of the second alphabet partition part $\Sigma2$ are related by an exclusive choice operator $\times$ as they are represented by leaf node A of the inner node O representing the exclusive choice operator $\times$. The activities e and f of the third alphabet partition part $\Sigma3$ are related by a loop operator $\circlearrowleft$ as they are represented by leaf node A of the inner node O representing the loop operator $\circlearrowleft$.

It follows an evaluation of an embodiment of the method according to an aspect of the invention.

In this section the AIM is evaluated threefold. First, the influence of corrupting event log properties on the performance of our cut detection strategy is observed using different quality estimates. Then, the integrated parameter suggestion of AIM is compared to a hyper-parameter optimization on the identical set of parameters. Finally, the performance of AIM is compared to the performances of existing discovery algorithms.

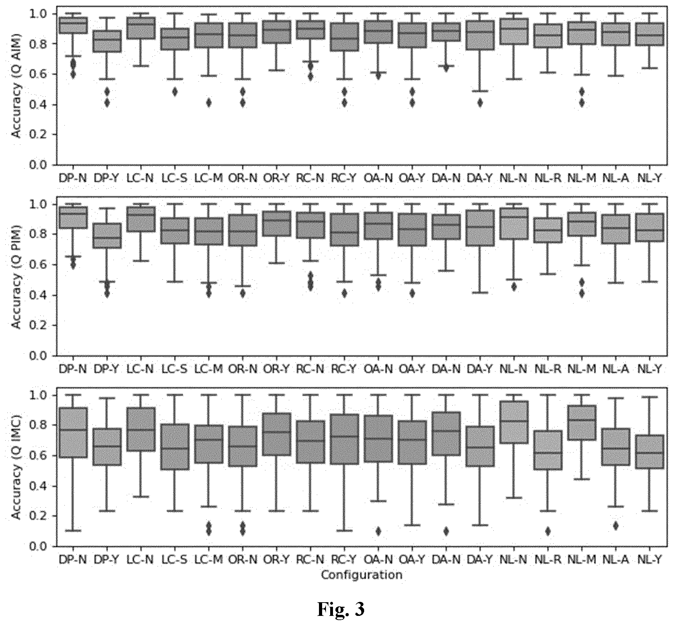

**Fig. 3** shows a box plot summarizing the accuracy distributions for various cut quality estimates when applying AIM to event logs of the Process Discovery Contest 2022.

Using 480 synthesized event logs L from the Process Discovery Contest 2022 (PDC) [12] it is observed if there are any structural weaknesses in the clustering-based cut detection. The PDC event logs are all generated from a configurable process model, which makes it possible to evaluate the influence of each model property individually. There are the binary properties of long-term dependencies (denoted by DP on the x-axis), optional choice constructs (OR), routing constructs (RC), optional activities (OA) and duplicated activities (DA), which are either included (-Y) or not (-N). The model can additionally have loops with single entry points (LC-S), multiple entry points (LC-M), or no loops at all (LP-N). Each possible combination of these configurations results in a ground truth model, which is used to generate a training event log, with a thousand random walks through the model. These event logs can either be noise free (NL-N), or have events removed (NL-R), moved (NL-M) or added (NL-A). A combination of events being removed, moved and added is possible as well (NL-Y). To evaluate the quality of a discovered model, a thousand pairs of traces $\sigma_1$, $\sigma_2$ are classified by the discovered model $M_d$ and the ground truth model $M_o$. For each pair of traces $\sigma_1$, $\sigma_2$ it is determined whether $\text{FITNESS}_{Md}$ ($\sigma_1$) > $\text{FITNESS}_{Md}$ ($\sigma_2$) is equivalent to $\text{FITNESS}_{Mo}$ ($\sigma_1$) > $\text{FITNESS}_{Mo}$ ($\sigma_2$) or not.

The AIM is applied to the PDC logs with F = {0.0}, i.e., without filtering the event logs L. This way, the quality of the clustering-based cut detection may be evaluated for the different configurations in isolation from the parameter suggestion and the filtering method. Different cut quality estimates $Q_{IMC}$, $Q_{PIM}$ and $Q_{AIM}$ are used to compare their performance, wherein $Q_{IMC}$ is the cut quality estimate used within the Inductive Miner incomplete (IMc) [3] and $Q_{PIM}$ is the cut quality estimate used within the Probabilistic Inductive Miner (PIM) [4]. Fig. 3 shows the resulting accuracy distributions for each property and cut quality estimate Q.

AIM achieves an average classification accuracy of 0.86 with $Q_{AIM}$, 0.84 with $Q_{PIM}$ and 0.70 with $Q_{IMC}$. The comparatively worse performance of $Q_{IMC}$ can be attributed to the overestimation of parallel cuts, due to the assumption of incomplete behavior. $Q_{PIM}$ and $Q_{AIM}$ achieve a higher average accuracy than $Q_{IMC}$, for all model configurations, with $Q_{AIM}$ performing more consistent than $Q_{PIM}$.

The biggest drop in performance, independent of the utilized cut quality estimate, is caused by including long term dependencies in the model (DP). The second highest drop is due to the general inclusion of loops (LC), with only a small difference between simple and complex loops. The remaining properties cause less significant and consistent differences in the accuracy distributions. It is assumed that the performance for long term dependencies drops due to an information loss induced during the event log splitting. Any potential dependencies between events that end up in different sub-logs are not considered in subsequent recursion steps. These results clearly showcase, that AIM successfully accounts for a vast range of model and event log properties, within the discussed limitations. Additionally, the new cut quality estimate $Q_{AIM}$ consistently outperforms $Q_{PIM}$ and $Q_{IMC}$ in this setting.

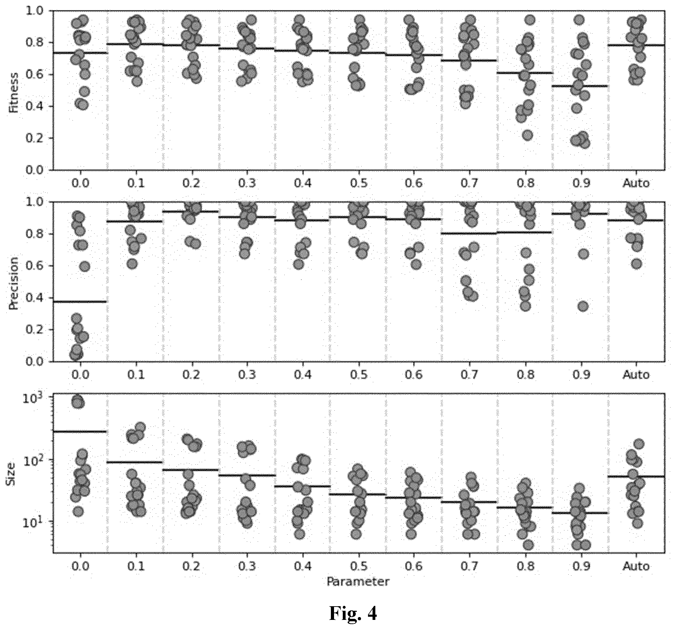

**Fig. 4** shows a hyper-parameter optimization according to an aspect of the invention.

Using 18 real-life event logs from the Business Process Intelligence Challenge [12] and other public benchmarks [13]- [22] the integrated parameter suggestion is quantitatively evaluated. First, AIM is applied using $Q_{AIM}$ and each of the filter parameter spaces in $\{F \subset \{x/10 \mid x \in \mathbb{N} \ \wedge \ x < 10\} \mid |F| = 1\}$, which represents a hyper-parameter optimization. Additionally, AIM is applied to the same event logs, using the integrated parameter suggestion with access to the parameter space $F = \{x/10 \mid x \in \mathbb{N} \wedge x < 10\}$. Subsequently, the alignment-based fitness and precision, as well as model size, are measured in terms of nodes required to represent a model in the standardized BPMN format [4].

AIM with the integrated parameter suggestion, on average, achieves a fitness of 0.78, a precision of 0.88 and a model size of 51 nodes across the 18 event logs. The results for all investigated parameter spaces and event logs are visualized in Fig. 4. The average fitness of the parameter suggestion is optimal across all investigated parameter spaces, with the hyperparameter optimization yielding an average value of 0.77 for F = {0.2}. For the same parameter space F = {0.2} the precision improves in comparison to the integrated parameter suggestion, with an average value of 0.93. This however comes at the cost of larger models with 70 nodes on average. The Hyper-parameter optimizations of the model size leads to the parameter space of F = {0.9}. On average, it produces smaller models with only 13 nodes and a high precision of 0.92 but causes a worse fitness of 0.53 in return. Overall, the results showcase that the integrated parameter suggestion can dynamically balance the quality metrics of fitness, precision and model size, without requiring a time intensive hyper-parameter optimization, which took five days in our setup. The runtime of AIM, with the integrated parameter suggestion, amounted to less than half an hour in contrast.

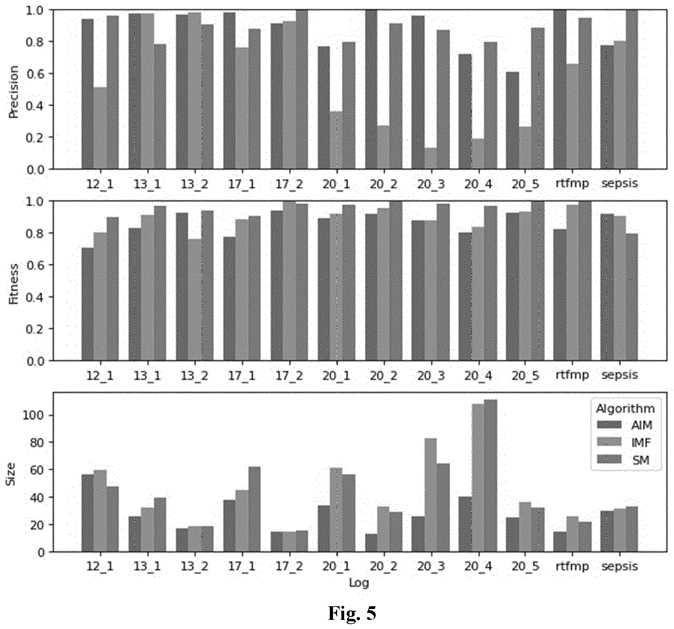

**Fig. 5** shows a grouped bar chart comparing evaluation results of the method according to an aspect of the invention to methods of prior art.

Using the benchmark event logs from [12]-[22] the AIM is compared to the existing process discovery algorithms Inductive Miner infrequent (IMf), Inductive Miner incomplete (IMc) and Split Miner (SM). The existing algorithms IMf, IMc and SM are applied using their default parameters and AIM is applied using the integrated parameter suggestion according to an aspect of the invention. All experiments are executed on the same hardware, providing an Intel Core I5-8625-U processor with exclusive access to 16GB of working memory. For the discovery of a single process model and for the calculation of a single metric time limits of four hours and twelve hours are selected, respectively.

For IMc, eight timeouts are observed during the model discovery and six more timeouts during the model evaluation. The exponential time complexity of IMc may explain the timeouts during the model discovery. The high amount of silent $\tau$ structures in the discovered models may explain the excessive amount of time needed for the model evaluation. SM produced three unsound models and caused another three timeouts during the model evaluation. Presumably, the evaluation timeouts result from the relatively large size of the discovered models. IMf caused a similar problem, with evaluation timeouts on the six largest models. AIM was the only algorithm to discover sound models for all 18 event logs, that could also be evaluated within the given time limit.

In fact, IMc is excluded from further comparison, because results for only four event logs were obtained. Additionally, the six event logs from [16] and [18], on which only AIM was able to find sound models that could be evaluated in the given time limit are excluded. These logs have a high number of unique activities, 264 on average, which seems to be a limiting factor for IMc, IMf and SM. AIM achieved a precision of 0.87, a fitness of 0.62 and a model size of 97 nodes on average for these logs.

Fig, 5 shows the results for the remaining event logs and algorithms, wherein the x-axis denotes the reference to the event logs L of the respective data sets. The average precision of AIM and SM is similar with 0.88 and 0.89, while IMf only achieves an average precision of 0.57, due to its poor performance on the event logs from [19]. Most models with the highest precision per event log are found by SM (6/12) and AIM (4/12), while IMf only produces the most precise model for the event logs from [14] and [15]. SM discovers the models with the highest fitness (10/12) with an average fitness of 0.95. The models found by AIM and IMf have a worse fitness of 0.86 and 0.89 respectively. AIM in return produces the smallest models with an average size of 28 nodes, compared to 46 for IMf and 44 for SM. Overall, AIM trades in a little fitness to find small and precise models in comparison to SM and IMf. In return, it provides the unique ability to handle event logs with a high number of unique activities and removes the need for a parameter choice.

Conclusion:

Although algorithms using the inductive miner framework often guarantee perfect fitness, they typically lack precision. In the past there have been several mitigation strategies presented but they either perform poorly in terms of process quality or in terms of runtime. Compared to other discovery algorithms the method according to the invention, AIM, excels at handling event logs with a high number of unique activities. Furthermore, AIM is exceptionally good at producing low control flow complexity models that still provide high precision and reasonable fitness.

AIM utilizes clustering techniques to investigate an exponentially growing state space in polynomial runtime. According to an aspect of the invention, the method comprises an integrated parameter suggestion, based on novel cut quality estimates, under consideration of the information loss induced by filtering the event log.

The evaluation showed that AIM successfully balances fitness, precision and model size in a given parameter space, without requiring human guidance or a time intensive hyper-parameter optimization. The provided cut quality estimate additionally outperformed quality estimates from existing discovery algorithms consistently and handled challenging event log properties, such as infrequent or incomplete behavior. In comparison to existing discovery algorithms only AIM is able to handle up to 400 unique activities per event log, without suffering from comparative performance drawbacks.

Reference numerals

a, b      activities
$\tau$      silent activity
A      leaf node of the process tree
O      inner node of the process tree
T      process tree
L      event log
Lf      filtered event log
$\sigma$      trace
$\Sigma$      alphabet of an event log
$\Sigma 1, \Sigma 2$      partition parts of the alphabet
L1, L2      sub-event logs
R      relation estimate
M      relation estimate multi-set
Q      cut quality estimate
f      filter parameter value
F      filter parameter space
$S_L$      cut state space
N, $N_f$      filter penalty term
$\oplus$      operator
$\times$      exclusive choice operator
$\parallel$      parallel operator $\circlearrowright$
$\rightarrow$      sequence operator
$\circlearrowleft$         loop operator
a $\gg$ b      directly follows-edge
a $\gg^*$ b      strictly indirectly follows-edge
a $\gg^+$ b      eventually follows-edge

Literature

[1] Leemans, S.J.J., Fahland, D., van der Aalst, W.M.P. (2013). Discovering Block Structured Process Models from Event Logs - A Constructive Approach. In: Colom, JM., Desel, J. (eds) Application and Theory of Petri Nets and Concurrency. PETRI NETS 2013. Lecture Notes in Computer Science, vol 7927. Springer, Berlin, Hei-delberg. https://doi.org/10.1007/978-3-642 38697-8 17

[3] Leemans, S.J.J., Fahland, D., van der Aalst, W.M.P. (2014). Discovering Block-Structured Process Models from Incomplete Event Logs. In: Ciardo, G., Kindler, E. (eds) Application and Theory of Petri Nets and Concurrency. PETRI NETS 2014. Lecture Notes in Computer Science, vol 8489. Springer, Cham. https://doi. org/10.1007/978-3-319-07734-5 6

[4] A. Augusto, R. Conforti, M. Dumas, M. L. Rosa, F. M. Maggi, A. Marrella, M. Mecella, and A. Soo, "Automated discovery of process models from event logs: Review and benchmark," IEEE Trans. Knowl. Data Eng., vol. 31, no. 4, pp. 686-705, 2019.

Datasets

[12] Verbeek, E. (2022). Process Discovery Contest 2022 (Version 1) [Data set]. 4TU.ResearchData. https://doi. org/10.4121/21261402.V1

[13] D. Brons, R. Scheepens, and D. Fahland, "Striking a new balance in accuracy and simplicity with the probabilistic inductive miner," in 3rd International Conference on Process Mining, ICPM 2021, Eindhoven, The Netherlands, October 31 - Nov. 4, 2021 (C. D. Ciccio, C. D. Francescomarino, and P. Soffer, eds.), pp. 32-39, IEEE, 2021.

[14] van Dongen, Boudewijn (2012): BPI Challenge 2012. Version 1. 4TU.ResearchData. dataset. https://doi. org/10.4121/uuid:3926db30- f712-4394-aebc-75976070e91f

[15] Ward Steeman (2013): BPI Challenge 2013, incidents. Version 1. 4TU.ResearchData. dataset. https://doi. org/10.4121/uuid:500573e6- accc-4b0c-9576-aa5468b10cee

[16] Ward Steeman (2013): BPI Challenge 2013, closed problems. Version 1. 4TU.ResearchData. dataset. https://doi.org/10.4121/uuid:c2c3b154- ab26-4b31-a0e8-8f2350ddac11

[17] van Dongen, B.F. (Boudewijn) (2015): BPI Challenge 2015. Version 1. 4TU.ResearchData. collection. https://doi. org/10.4121/uuid:31a308efc844-48da-948c-305d167a0ec1

[18] van Dongen, Boudewijn (2017): BPI Challenge 2017. Version 1. 4TU.ResearchData. dataset. https://doi. org/10.4121/uuid:5f3067df-f10b45dab98b-86ae4c7a310b

[19] van Dongen, Boudewijn (2019): BPI Challenge 2019. Version 1. 4TU.ResearchData. dataset. https://doi. org/10.4121/uuid:d06aff4b-79f0- 45e6-8ec8-e19730c248f1

[20] van Dongen, Boudewijn (2020): BPI Challenge 2020. Version 1. 4TU.ResearchData. collection. https://doi. org/10.4121/uuid:52fb97d4- 4588-43c9-9d04-3604d4613b51

[21] de Leoni, M. (Massimiliano); Mannhardt, Felix (2015): Road Traffic Fine Management Process. Version 1. 4TU.ResearchData. dataset. https://doi.org/10.4121/uuid:270fd440-1057-4fb9-89a9-b699b47990f5

[22] Mannhardt, Felix (2016): Sepsis Cases - Event Log. Version 1. 4TU.ResearchData. dataset. https://doi. org/10.4121/uuid:915d2bfb7e84-49ad-a286-dc35f063a460

**Claims**

1. A method of constructing a process tree (T) out of an event log (L), the process tree (T) representing a process model which describes an allowed behavior of a process, wherein the process is executed by executing a plurality of activities (a, b),
the method comprising the following steps:

   a) receiving the event log (L) comprising a plurality of traces ($\sigma$) of the activities (a; b) ordered by execution time,
   b) determining whether the event log is a predetermined base case, and if so, adding at least one node representing the base case to the process tree (T),
   otherwise
   c) determining, whether an operator ($\oplus$) exists for splitting the event log (L) based on a directly follows footprint generated for each operator (⊕), and if so, splitting the event log (L) into two sub-event logs (L1, L2) for the operator (⊕) and adding an inner node representing the operator (⊕) to the process tree (T) and continuing with step e),
otherwise
d) determining the operator (⊕) based on clustering the activities in the event log, splitting the event log (L) into two sub-event logs (L1; L2) for the operator (⊕) and adding an inner node representing the operator (⊕) to the process tree (t) and continuing with step e),
e) repeating the steps b) to d) for each respective sub-event log (L1; L2) as event log (L) until step b) applies to each sub-event log (L1; L2), and
f) providing the process tree (t), wherein the process tree comprises a number of leaf nodes (A) and a number of inner nodes (O), wherein each leaf node (A) either represents an execution of an activity or an execution of no activity, and wherein each inner node (O) has at least two children and represents by which operator (⊕) its children are related.

2. The method of claim 1, wherein the splitting of the event log (L) is determined based on partitioning a set of unique activities in the event log (L), the alphabet (Σ), into two alphabet partition parts (Σ1; Σ2), wherein the operator (⊕) represents a relationship between the two alphabet partition parts (Σ1; Σ2), and wherein assigning each of the activities in a respective alphabet partition (Σ1; Σ2) to the corresponding sub-event log (L1; L2).

3. The method of claim 1 or claim 2, wherein step d) further comprises filtering the event log (L) based on the distribution of each activity across the traces (σ) of the event log (L).

4. The method of claim 3, wherein the filtering comprises determining, for each activity, a count of traces comprising the respective activity, determining a filter threshold by multiplying the maximum count of traces with a predefined filter parameter value (f), and removing every activity from the event log (L) for which the count of traces is smaller than the filter threshold.

5. The method of any of the claims 2 to 4, wherein the clustering of step d) further comprises: determining relation estimates (R) for each pair of activities in the alphabet (Σ), wherein each relation estimate (R) represents a distance between the respective activities, clustering the activities based on the relation estimates (R), wherein each cluster corresponds to one of the alphabet partition parts (Σ1; Σ2) for the operator (⊕), wherein the operator (⊕) is predetermined out of a group of operators, the group consisting of a sequence operator (->), an exclusive choice operator (×) and a parallel operator (∥).

6. The method of claim 5, wherein a combination of the determined alphabet partition parts (Σ1; Σ2) and the respective operator (⊕) by which the alphabet partition parts (Σ1; Σ2) are related is a cut through the event log (L), wherein the method further comprises evaluating a cut quality estimate (Q) for at least one cut for each operator (⊕) of the group of operators.

7. The method of claim 6, further comprising determining alphabet partition parts (Σ1; Σ2) for a loop operator ( ↺ ) by assigning activities based on their pairwise activity relation to a body part or a redo part, resulting in two alphabet partition parts (Σ1; Σ2), and evaluating the cut quality estimate (Q) for the cut comprising the loop operator ( ↺ ) and the two alphabet partition parts (Σ1; Σ2).

8. The method of any of claims 6 to 7, further comprising evaluating the cut quality estimate (Q) for a silent skip cut and a silent loop cut.

9. The method of any of claims 6 to 8, wherein evaluating each cut quality estimate (Q) for a set of predefined filter parameters out of a filter parameter space (F) for filtering the event log (L), wherein correcting each cut quality estimate (Q) by a filter penalty term (N).

10. The method of claim 8, wherein the filter penalty term (N) is a ratio of the number of activities in the filtered event log (Lf) and the number of activities in the original event log (L).

11. The method of any of claims 5 to 7, wherein the cut quality estimate (Q) is generated by accumulating a relation estimate multi-set (M) comprising all relevant relation estimates (R) based on the operator (⊕), wherein computing the relevant relation estimates (R) based on a frequency of directly follows relations, a frequency of strictly indirectly follows relations and a frequency of eventually follows relations for pairs of activities.

12. The method of claim 4, wherein the cut comprising the sequence operator is a sequence cut ($\rightarrow$, $\Sigma$1, $\Sigma$2) generating the two distinct alphabet partitions ($\Sigma$1; $\Sigma$2), wherein one alphabet partition ($\Sigma$1) comprises the activities of the alphabet ($\Sigma$) which are executed per trace ($\sigma$) of the event log (L) exclusively before the activities of the other alphabet partition ($\Sigma$2).

13. The method of claim 4, wherein the cut comprising the exclusive choice operator ($\times$) is an exclusive choice cut ($\times$, $\Sigma$1, $\Sigma$2) generating the two distinct alphabet partitions ($\Sigma$1; $\Sigma$2), wherein the activities are executed per trace ($\sigma$) of the event log (L) exclusively from one alphabet partition ($\Sigma$1).

14. The method of claim 4, wherein the cut comprising the parallel operator ($\|$) is a concurrent cut ($\|$, $\Sigma$1, $\Sigma$2) generating the two distinct alphabet partitions ($\Sigma$1; $\Sigma$2), wherein the activities are executed per trace ($\sigma$) of the event log (L) interleaved in parallel in different parts of one alphabet partition ($\Sigma$1).

15. The method of claim 6, wherein the cut comprising the loop operator ( ↺ ) is a loop cut ( ↺ , $\Sigma$1, $\Sigma$2), generating two distinct alphabet partitions ($\Sigma$1; $\Sigma$2), wherein the activities of the one alphabet partition ($\Sigma$1) are executed per trace ($\sigma$) of the event log (L) and optionally repeated after the activities of the other alphabet partition ($\Sigma$2) being executed in the event log (L).

**Fig. 1**

**Fig. 2**

**Fig. 3**

**Fig. 4**

Fig. 5

Europäisches
Patentamt

European
Patent Office

Office européen
des brevets

# EUROPEAN SEARCH REPORT

Application Number

EP 23 18 0020

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/076147 A1 (SCHEEPENS ROELAND JOHANNUS [NL] ET AL) 10 March 2022 (2022-03-10) * paragraphs [0004], [0042] – [0051], [0056] – [0060], [0072], [0077], [0095], [0098], [0102], [0103], [0106] * | 1-15 | INV. G06Q10/063 |
| A | LEEMANS SANDER J ET AL: "Scalable process discovery and conformance checking", SOFTWARE & SYSTEMS MODELING, SPRINGER BERLIN HEIDELBERG, BERLIN/HEIDELBERG, vol. 17, no. 2, 8 July 2016 (2016-07-08), pages 599-631, XP036485712, ISSN: 1619-1366, DOI: 10.1007/S10270-016-0545-X [retrieved on 2016-07-08] * pages 602-606 * * pages 609-611 * | 1-15 | |

TECHNICAL FIELDS
SEARCHED      (IPC)

G06Q

The present search report has been drawn up for all claims

| Place of search | Date of completion of the search | Examiner |
|---|---|---|
| Munich | 20 October 2023 | Breidenich, Markus |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

 ......................................................................

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 23 18 0020

This annex lists the patent family members relating to the patent documents cited in  the above-mentioned European search report.
The members are as contained in the European Patent Office EDP file on
The European Patent Office is in no way liable for these particulars which are merely given for the purpose of information.

20-10-2023

| Patent document cited in search report | Publication date | Patent family member(s) | Publication date |
|---|---|---|---|
| US 2022076147 A1 | 10-03-2022 | NONE | |

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **LEEMANS, S.J.J.** ; **FAHLAND, D.** ; **AALST, W.M.P.** *Discovering Block Structured Process Models from Event Logs - A Constructive Approach*, 2013
- Application and Theory of Petri Nets and Concurrency. PETRI NETS. 2013
- Lecture Notes in Computer Science. Springer, vol. 7927
- Discovering Block-Structured Process Models from Incomplete Event Logs. **LEEMANS, S.J.J.** ; **FAHLAND, D.** ; **VAN DER AALST, W.M.P.** Application and Theory of Petri Nets and Concurrency. PETRI NETS 2014. Lecture Notes in Computer Science. Springer, Cham., 2014, vol. 8489
- **A. AUGUSTO** ; **R. CONFORTI** ; **M. DUMAS** ; **M. L. ROSA** ; **F. M. MAGGI** ; **A. MARRELLA** ; **M. MECELLA** ; **A. SOO**. Automated discovery of process models from event logs: Review and benchmark. *IEEE Trans. Knowl. Data Eng.*, 2019, vol. 31 (4), 686-705
- **VERBEEK, E.** *Process Discovery Contest 2022*, 2022, https://doi.org/10.4121/21261402.V1
- Striking a new balance in accuracy and simplicity with the probabilistic inductive miner. **D. BRONS** ; **R. SCHEEPENS** ; **D. FAHLAND**. 3rd International Conference on Process Mining, ICPM. IEEE, 31 October 2021, 32-39

- **VAN DONGEN, BOUDEWIJN**. *BPI Challenge 2012*, 2012, https://doi.org/10.4121/uuid:3926db30- f712-4394-aebc-75976070e91f
- **WARD STEEMAN**. *BPI Challenge 2013*, 2013, https://doi.org/10.4121/uuid:500573e6- accc-4b0c-9576-aa5468b10cee
- **WARD STEEMAN**. *BPI Challenge 2013*, 2013, https://doi.org/10.4121/uuid:c2c3b154- ab26-4b31-a0e8-8f2350ddac11
- **VAN DONGEN, B.F. (BOUDEWIJN**. *BPI Challenge 2015*, 2015, https://doi.org/10.4121/uuid:31a308efc844-48da-948c-305d167a0ec1
- **VAN DONGEN, BOUDEWIJN**. *BPI Challenge 2017*, 2017, https://doi.org/10.4121/uuid:5f3067df-f10b45dab98b-86ae4c7a310b
- **VAN DONGEN, BOUDEWIJN**. *BPI Challenge 2019*, 2019, https://doi.org/10.4121/uuid:d06aff4b-79f0-45e6-8ec8-e19730c248f1
- **VAN DONGEN, BOUDEWIJN**. *BPI Challenge 2020*, 2020, https://doi.org/10.4121/uuid:52fb97d4- 4588-43c9-9d04-3604d4613b51
- **DE LEONI, M. (MASSIMILIANO** ; **MANNHARDT, FELIX**. *Road Traffic Fine Management Process*, 2015, https://doi.org/10.4121/uuid:270fd440-1057-4fb9-89a9-b699b47990f5
- **MANNHARDT, FELIX**. *Sepsis Cases - Event Log.*, 2016, https://doi.org/10.4121/uuid:915d2bfb7e84-49ad-a286-dc35f063a460